# FASCICULE DE BREVET EUROPEEN

(11) **EP 1 788 525 B1**
(45) Date de publication et mention de la délivrance du brevet: **25.05.2011**
(21) Numéro de dépôt: 07004919.2
(22) Date de dépôt: 04.06.2004
(51) Int. Cl.: G06T 11/00, G06T 7/00

(54) **Procédé d'imagerie radiographique pour la reconstruction tridimensionnelle, dispositif et programme d'ordinateur pour mettre en oeuvre ce procédé**
Bildgebendes Verfahren für die dreidimensionale Rekonstruktion, Vorrichtung und Computerprogramm zur Durchführung besagten Verfahrens
Method of radiographic imaging for three-dimensional reconstruction, device and computer program for carrying out said method

(30) Priorité: 10.06.2003 FR 0306962
(43) Date de publication de la demande: 23.05.2007
(62) Demande divisionnaire de: 04767262.1
(73) Titulaire: EOS Imaging, 75011 Paris (FR)
(72) Inventeur: Pomero, Vincent, 75013 Paris (FR); Skalli, Wafa, 75013 Paris (FR); Deschenes, Sylvain, Montréal, Québec H1Y 393 (CA); de Guise, Jacques, Montréal, Québec 2HW 2L6 (CA); Laporte, Sébastien, 91300 Massy (FR); Godbout, Benoit, Montréal, Québec 2HT 2C1 (CA); Branchaud, Dominic, Montréal, Québec H1Y 2A1 (CA); Bleau, André, Dollard-des-ormeaux Québec H9B 1H9 (CA); Mitton, David, 94270 Krémlin Bicétre (FR); Dorion, Irène, 75011 Paris (FR)
(74) Mandataire: Cabinet Plasseraud

(56) Documents cités:
- WO-A-01/52190
- DE-A1- 10 137 661
- FR-A- 2 810 769
- DELORME S ET AL: "THREE-DIMENSIONAL MODELLING AND RENDERING OF THE HUMAN SKELETAL TRUNK FROM 2D RADIOGRAPHIC IMAGES" 3-D DIGITAL IMAGING AND MODELING, 1999. PROCEEDINGS. SECOND INTERNATIONAL CONFERENCE ON OTTAWA, ONT., CANADA 4-8 OCT. 1999, LOS ALAMITOS, CA, USA,IEEE COMPUT. SOC, US, 4 octobre 1999 (1999-10-04), pages 497-505, XP010358815 ISBN: 0-7695-0062-5
- ANDRE B ET AL: "APPROACH FOR THE SMOOTHING OF THREE-DIMENSIONAL RECONSTRUCTIONS OF THE HUMAN SPINE USING DUAL KRIGING INTERPOLATION" MEDICAL AND BIOLOGICAL ENGINEERING AND COMPUTING, PETER PEREGRINUS LTD. STEVENAGE, GB, vol. 34, no. 3, 1 mai 1996 (1996-05-01), pages 185-191, XP000642209 ISSN: 0140-0118
- PETIT Y ET AL: "ESTIMATION OF 3D LOCATION AND ORIENTATION OF HUMAN VERTEBRAL FACET JOINTS FROM STANDING DIGITAL RADIOGRAPHS" MEDICAL AND BIOLOGICAL ENGINEERING AND COMPUTING, PETER PEREGRINUS LTD. STEVENAGE, GB, vol. 36, no. 4, 1 juillet 1998 (1998-07-01), pages 389-394, XP000755436 ISSN: 0140-0118

## Description

La présente invention est relative aux procédés d'imagerie radiographique pour la reconstruction tridimensionnelle, aux dispositifs et aux programmes d'ordinateur pour mettre en oeuvre ce procédé.

Plus particulièrement, l'invention concerne un procédé d'imagerie radiographique pour la reconstruction tridimensionnelle, adapté pour calculer un modèle à trois dimensions d'au moins un objet à imager dans un champ d'observation, ledit objet comportant au moins une partie caractéristique, ce procédé comprenant une étape au cours de laquelle :
(c) on calcule la forme à trois dimensions d'un modèle représentant l'objet à partir d'un modèle géométrique connu a priori de l'objet.

Ce genre de procédé est par exemple décrit dans la demande de brevet français publiée sous le n° 2 810 769, dans lequel un utilisateur doit repérer manuellement des repères de contrôle appartenant au dit objet, qui peuvent être des points, des segments, des droites, des arcs, des contours, des arêtes ou autres, sur chaque image, ce qui demande à la fois de sa part des connaissances précises en anatomie pour localiser précisément les repères de contrôle, du temps, une grande précision, et une estimation subjective des effets des biais de projection. Cette importante intervention humaine limite en particulier la reproductibilité de la reconstruction lorsque celle ci est réalisée par un personnel non hautement spécialisé.

La présente invention a notamment pour but de fournir un procédé dans lequel l'intervention de spécialistes est limitée.

A cet effet, selon l'invention, un procédé du genre en question est essentiellement caractérisé en ce qu'on met en outre en oeuvre une étape (b), au cours de laquelle on calcule au moins un estimateur correspondant à au moins une caractéristique géométrique de l'objet, à partir d'un volume de confinement de ladite partie caractéristique de l'objet, ledit volume étant estimé à partir d'au moins un motif géométrique visible sur deux images radiographiques à deux dimensions du champ d'observation, prises à partir d'une source selon deux directions de prise de vue non parallèles, et de la position de la source lors de la prise d'image,
ledit modèle géométrique comprenant des informations liées à la forme à trois dimensions d'objets de même nature permettant d'établir, à partir de l'estimateur, la caractéristique géométrique pour le modèle représentant l'objet.

Grâce à ces dispositions, on substitue à l'identification de nombreux repères sur chaque image de l'objet, sujette à erreurs, une information fiable d'objets de même nature contenue dans le modèle géométrique. Il est alors facile et rapide, à partir d'un nombre minimum d'entrées identifiables par un non-spécialiste, de retrouver la forme du modèle particulier.

Dans des modes de réalisation préférés de l'invention, on peut éventuellement avoir recours en outre à l'une et/ou à l'autre des dispositions suivantes :
- l'étape (c) comprend des étapes au cours desquelles :
   (c1) on estime un référentiel local associé à l'objet à partir au moins d'informations issues des motifs géométriques détectés sur chaque image,
   (c2) on détermine la position tridimensionnelle de repères de contrôle de l'objet dans le repère local par inférence sur le modèle géométrique à partir de l'estimateur, et
   (c3) on calcule la forme à trois dimensions du modèle calculé par déformation d'un modèle générique prédéterminé correspondant audit objet, ledit modèle générique comportant des repères qui correspondent auxdits repères de contrôle, de façon que ledit modèle calculé suive une forme proche d'une isométrie du modèle générique tout en maintenant en coïncidence les repères du modèle générique déformé avec lesdits repères de contrôle ;
- ledit modèle géométrique est constitué à partir d'une base de données contenant des informations géométriques liées à au moins l'une des propriétés suivantes :
   - des coordonnées de repères de contrôle d'un ensemble d'objets de même nature que l'objet à imager, et
   - des dimensions caractéristiques d'un ensemble d'objets de même nature que l'objet à imager ;
- l'étape (c) est effectuée par inférence statistique sur ladite base de données en utilisant ledit estimateur comme prédicteur ;
- au cours de l'étape (b), on détermine ledit volume de confinement à partir d'une surface réglée définie par au moins un motif géométrique issu de la projection de la partie caractéristique de l'objet sur la première image et la trajectoire de la première source radioactive lors de la prise de la première image et d'une surface réglée définie par au moins un motif géométrique issu de la projection de la partie caractéristique de l'objet sur la deuxième image et la trajectoire de la deuxième source radioactive lors de la prise de la deuxième image ;
- lesdits motifs géométriques sont identifiés manuellement par un utilisateur sur chaque image ;
- lesdits motifs géométriques sont déterminés par traitement numérique de chacune des images, lesdits motifs géométriques étant obtenus par analyse de la luminosité des images ;
- on met en oeuvre les étapes suivantes :
   (α) on calcule une ligne caractéristique estimée de l'objet, et
   (β) on redresse l'image en appliquant une première déformation adaptée pour que ladite ligne caractéristique redressée soit sensiblement un segment de droite,
      on met en oeuvre le traitement numérique pour lesdites images redressées pour obtenir au moins un motif géométrique redressé, et on met en outre en oeuvre une étape au cours de laquelle
      (ζ) on obtient les motifs géométriques en appliquant auxdits motifs géométriques redressés obtenus au cours de l'étape (β) une deuxième déformation adaptée pour que le motif obtenu en appliquant ladite deuxième déformation à ladite image redressée se positionne proche de celui sur l'image initiale ;
- l'objet est une vertèbre et, sur chaque image,
   (γ) on estime des parois latérales issues de la projection de chaque corps vertébral,
   (δ) on estime au moins une zone de moindre niveau de gris de l'image, issue de la projection d'une zone du champ d'observation comprenant un espace intervertébral, sensiblement orthogonale aux parois latérales par une analyse des caractéristiques de luminosité de l'image, et
   (ε) on détermine au moins un coin du motif géométrique par l'intersection dudit espace intervertébral avec ladite paroi latérale.
- au cours de l'étape (δ),
   (δ1) on estime une valeur moyenne de luminosité sur chaque ligne de pixels de l'image orthogonale à ladite ligne caractéristique dans le plan de l'image, et
   (δ2) on estime une projection d'au moins un espace intervertébral par application d'un seuil de luminosité sur lesdites valeurs moyennes ;
- au cours de l'étape (γ), on estime des projections de parois latérales de la vertèbre par déformation d'une paroi latérale initiale estimée à partir du modèle géométrique ;
- au cours de l'étape (γ), lesdites projections de parois latérales sont estimées en minimisant une fonction de coût indexée sur le contraste de l'image et une paroi latérale moyenne de ladite vertèbre estimée à partir d'une base de données de vertèbres ;
- ledit objet est une partie de colonne vertébrale et, au cours de l'étape (α), on calcule ladite ligne caractéristique par interpolation d'un nombre adapté de points de la projection de ladite colonne vertébrale fournis par un utilisateur ;
- on divise l'intensité lumineuse obtenue pour chaque pixel de chaque image par une valeur d'intensité lumineuse d'une image floue comprimée du même objet ;
- ladite image floue comprimée est obtenue en rééchelonnant pour chaque image des valeurs de luminosité moyennes de chaque pixel obtenues en effectuant pour chaque pixel une moyenne pondérée des valeurs d'intensité de pixels voisins ;
- on réduit sur au moins une image les interférences dues à au moins une structure anatomique parasite, en soustrayant à ladite image une image atténuante représentative de l'influence de ladite structure anatomique parasite obtenue à partir d'une caractéristique connue a priori sur ladite structure anatomique ;
- le procédé comprend en outre une étape (a) au cours de laquelle on obtient lesdites deux images par balayage simultané du champ d'observation suivant une direction de balayage, en détectant des signaux de deux faisceaux de rayons X non parallèles ayant traversé le champ d'observation, formant un plan d'irradiation, ladite direction de balayage étant non coplanaire audit plan d'irradiation ;
- ledit balayage est synchronisé avec la détection d'une manière adaptée pour que des signaux successifs provenant d'une même zone du champ d'observation soient sommés pendant la détection ;

Selon un autre aspect, l'invention concerne un procédé d'imagerie radiographique pour la reconstruction tridimensionnelle, adapté pour calculer un modèle à trois dimensions d'un premier objet à imager dans un champ d'observation comprenant en outre au moins un deuxième objet présentant une relation spatiale avec le premier objet, lesdits premier et deuxième objets comportant chacun au moins une partie caractéristique, ce procédé comprenant une étape au cours de laquelle :
(c) on calcule la forme à trois dimensions d'un modèle représentant le premier objet à partir d'un modèle géométrique connu a priori de l'objet,
caractérisé en ce qu'on met en outre en oeuvre une étape (b), au cours de laquelle on calcule au moins un estimateur correspondant à au moins ladite relation, à partir d'un volume de confinement, ledit volume étant estimé à partir d'au moins un motif géométrique représentatif de chaque objet visible sur deux images radiographiques à deux dimensions du champ d'observation, prises à partir d'une source selon deux directions de prise de vue non parallèles, et de la position de la source lors de la prise d'image,
ledit modèle géométrique comprenant des informations liées à la forme à trois dimensions d'objets de même nature permettant d'établir la caractéristique géométrique pour le modèle représentant le premier objet à partir de l'estimateur.

Selon un autre aspect, l'invention concerne un dispositif d'imagerie radiographique pour la reconstruction tridimensionnelle, adapté pour calculer un modèle à trois dimensions d'au moins un objet à imager dans un champ d'observation, ledit objet comportant au moins une partie caractéristique, ce dispositif comprenant :
(c) des moyens pour calculer la forme à trois dimensions d'un modèle représentant l'objet à partir d'un modèle géométrique connu a priori de l'objet, et
(b) des moyens pour calculer au moins un estimateur correspondant à au moins une caractéristique géométrique de l'objet, à partir d'un volume de confinement de ladite partie caractéristique de l'objet, ledit volume étant estimé à partir d'au moins un motif géométrique visible sur deux images radiographiques à deux dimensions du champ d'observation, prises selon deux directions de prise de vue non parallèles, et de la position de la source lors de la prise d'image,
ledit modèle géométrique comprenant des informations liées à la forme à trois dimensions d'objets de même nature permettant d'établir la caractéristique géométrique pour le modèle représentant l'objet à partir de l'estimateur.

Selon encore un autre aspect, l'invention concerne un programme d'ordinateur comprenant des portions de code de programme pour l'exécution des étapes d'un tel procédé lorsque ledit programme est exécuté sur un ordinateur.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un appareil de radiographie selon une forme de réalisation de l'invention, permettant d'effectuer une prise de vue de face et une prise de vue de profil du patient,
- la figure 2 est une vue schématique en perspective d'un modèle géométrique associé une vertèbre,
- les figures 3a sont des schémas représentatifs de radiographies frontale et latérale de la colonne vertébrale d'un patient,
- les figures 3b sont des vues schématiques correspondantes de la figure 3a redressées,
- les figures 3c sont des vues schématiques correspondant respectivement aux figures 3b, et représentant des valeurs de luminosité prises le long de l'axe vertical des figures 3b,
- les figures 3d sont des vues schématiques correspondantes aux figures 3a, dans lesquelles des points caractéristiques de motifs géométriques ont été identifiés, et
- les figures 4a et 4b sont des vues schématiques en perspective représentatives de l'obtention du volume de chaque corps vertébral à partir des points identifiés représentés sur les figures 3d.

Sur les différentes figures, les mêmes références désignent des éléments identiques ou similaires.

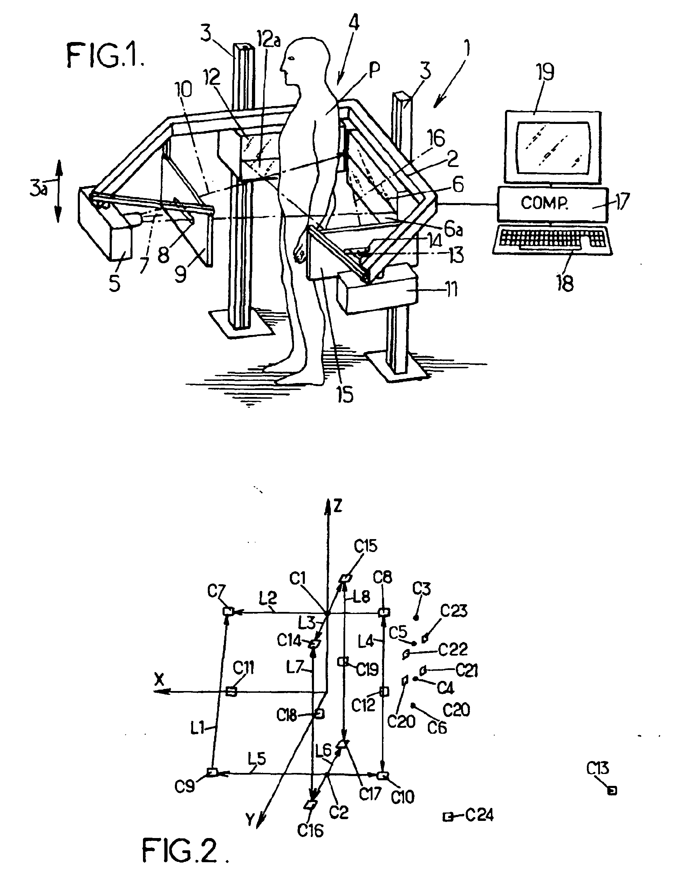

La figure 1 représente un dispositif radiographique 1 pour la reconstruction tridimensionnelle, comportant un bâti mobile 2 déplaçable verticalement de façon motorisée sur des guides verticaux 3, dans une direction de translation 3a.

Ce bâti entoure un champ d'observation 4 dans lequel peut prendre place un patient P, par exemple debout, ce qui permet d'observer la position des os du squelette de ce patient en station debout, ce qui peut être important par exemple pour les patients atteints de scoliose.

Le bâti mobile 2 porte une première source radioactive 5 et un premier détecteur 6 qui est disposé face à la source 5 au-delà du champ 4, et qui comporte au moins une ligne horizontale 6a de cellules de détection. Le détecteur 6 peut par exemple être un détecteur gazeux sensible aux basses doses de rayonnements, par exemple tel que décrit dans les documents FR-A-2 749 402 ou FR-A-2 754 068. Bien entendu, d'autres types de détecteurs pourraient éventuellement être utilisés dans le cadre de la présente invention.

La source radioactive 5 est adaptée pour émettre des rayons ionisants, notamment des rayons X, aptes à être détectés par le détecteur 6, dans une direction de prise de vue 7 antéropostérieure par rapport au patient P, en traversant une fente horizontale 8 ménagée dans un réticule 9 telle qu'une plaque métallique, pour générer un faisceau horizontal 10 de rayonnements ionisants dans le champ d'observation 4.

Par ailleurs, le bâti mobile 2 porte également une deuxième source radioactive 11 similaire à la source 5 et un deuxième détecteur 12 similaire au détecteur 6, qui est disposé face à la source 11 au-delà du champ 4, et qui comporte au moins une ligne horizontale 12a de cellules de détection.

La source radioactive 11 est adaptée pour émettre des rayons ionisants dans une direction de prise de vue latérale 13 par rapport au patient P, en traversant une fente horizontale 14 ménagée dans un réticule 15 telle qu'une plaque métallique, pour générer un faisceau horizontal 16 de rayonnements ionisants dans le champ d'observation 4.

Bien entendu, les sources radioactives et les détecteurs pourraient être en nombre supérieur à 2, et les directions de prise de vue de ces différentes sources radioactives pourraient, le cas échéant, ne pas être perpendiculaires entre elles, ni même horizontales.

Les deux détecteurs 6, 12 sont reliés à un micro-ordinateur 37 ou autre système électronique de commande, équipé :
- d'une interface d'entrée comprenant au moins un clavier et généralement une souris (non représentée), et
- d'une interface de sortie comprenant au moins un écran 19.

Le micro-ordinateur 37 peut également comporter des moyens d'exécuter un programme d'ordinateur adapté pour mettre en oeuvre le procédé ici décrit.

Le micro-ordinateur 37 peut également être relié aux moyens d'entraînement motorisés (non représentés) contenus dans les guides 3, aux sources 5, 11, de façon à commander le déplacement vertical du bâti et l'émission des rayonnements ionisants.

La détection peut être réalisée par un détecteur purement linéaire (une ligne d'image à la fois), ou par un détecteur matriciel de n'importe quel rapport de forme. L'acceptance angulaire du détecteur, donnée par le rapport de sa hauteur utile à la distance source détecteur, permet d'estimer sa capacité à minimiser le signal parasite provenant du rayonnement diffusé par le patient. Une plus faible acceptance angulaire assure à dose égale une meilleure qualité d'image (plus faible bruit) ou fournit une qualité d'image comparable à plus faible dose. Par contre une trop faible acceptance angulaire conduit à une trop faible proportion utile des rayons X émis par la source et donc à une diminution de la vitesse de balayage pour obtenir une image exploitable. Un compromis géométrique favorable entre ces deux effets antagonistes s'obtient pour une acceptance angulaire intermédiaire, par exemple un détecteur de hauteur entre 1 et 20 mm placé à 1,5 mètre de la source. Pour préserver le pouvoir séparateur dans le sens du balayage au niveau de ce qu'il est dans le cas d'un détecteur purement linéaire, on peut segmenter le détecteur en tranches de hauteur au plus égale à la résolution recherchée.

Dans le cadre d'un balayage, pour obtenir une meilleure résolution, on peut en outre additionner les signaux provenant de la même partie du patient mais délivrés en des tranches successives à des instants successifs. Cette sommation peut intervenir aussi bien dans une phase précoce du processus de conversion du rayonnement en signal (sommation de charges électriques, sommation analogique), que dans une phase plus en aval où le signal est déjà numérisé. Ceci est en particulier possible si, par une synchronisation adéquate, éventuellement mise en oeuvre par le micro-ordinateur 37, on s'assure que le déplacement de l'ensemble durant le temps élémentaire de mesure est égal à la hauteur d'une tranche, comme par exemple dans le cadre d'un détecteur à report et intégration.

Le dispositif qui vient d'être décrit fonctionne comme suit :

Au moyen du micro-ordinateur 37, on fait d'abord prendre deux images radiographiques du patient P, en faisant balayer le champ d'observation 4 par les faisceaux 10, 16 de rayonnements ionisants sur la hauteur correspondant à la zone du patient à observer, par exemple le rachis et le bassin, voire l'ensemble du squelette. A cet effet, le bâti est de préférence déplaçable sur une hauteur d'au moins 70 cm, voire supérieure à un mètre.

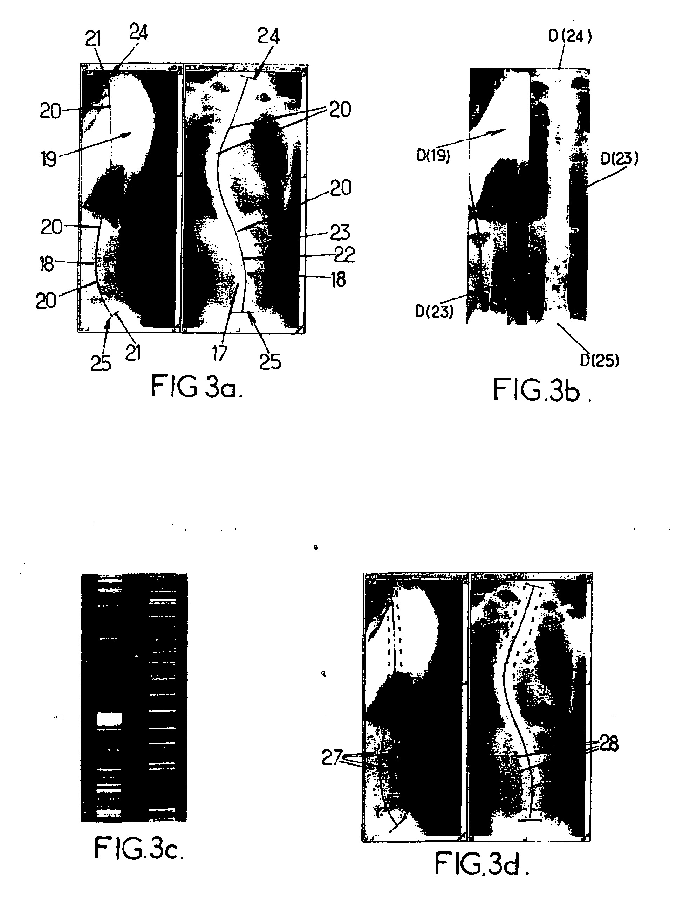

Au cours de ce mouvement, on enregistre dans la mémoire du micro-ordinateur 37 deux images radiographiques numériques, par exemple respectivement antéropostérieures et latérales de la partie examinée du patient, lesquelles images peuvent être visualisées sur l'écran 19 du micro-ordinateur, de la manière représentée sur la figure 3a.

Le procédé est ici présenté en faisant référence à la colonne vertébrale, mais un procédé similaire pourrait également être utilisé pour une structure simple dont on aurait une connaissance a priori, tel qu'un os simple, tel une seule vertèbre, une structure ligamentaire, ou autre, ou un ensemble de structures anatomiques tel qu'un membre inférieur ou supérieur, ou autres.

On dispose en outre d'une base de données des objets représentés sur les images radiographiques, en particulier les vertèbres, tel que représenté sur la figure 2, mais éventuellement aussi d'autres structures anatomiques, tels les ligaments ou autres.

La base de données peut contenir des données relatives à des repères particuliers de la vertèbre. Elle contient par exemple la position d'une vingtaine de points C1..C23 caractéristiques de la vertèbre, des longueurs caractéristiques L1..L8 de chaque vertèbre, telles que représentées sur la figure 2, des segments, droites ou arcs caractéristiques de l'objet, et/ou des contours et arêtes de l'objet.

Les coordonnées de points ou lignes caractéristiques peuvent être exprimées par exemple dans un référentiel local X, Y, Z. Dans l'exemple considéré, l'axe Z correspond à la direction axiale de la colonne vertébrale, l'axe X est déterminé de façon à définir avec l'axe Z le plan antéropostérieur de la vertèbre 20, l'axe Y étant perpendiculaire aux axes X, Z sus-mentionnés. De plus, l'origine O du référentiel est disposée au milieu des deux faces d'extrémité axiales de la partie principale "tubulaire" de la vertèbre, l'origine O étant par ailleurs positionnée pour que l'axe Z traverse la face axiale supérieure de la partie principale de la vertèbre en un repère C1 tel que là distance de ce repère C1 à l'extrémité avant C7 de ladite face axiale soit égale environ aux deux tiers de la distance totale entre les extrémités avant C7 et arrière C8 de la section antéropostérieure de ladite face axiale supérieure.

Les vertèbres peuvent également être classées dans la base de données en différentes sous-catégories, par exemple en fonction de leur emplacement anatomique. On distinguera par exemple les vertèbres thoraciques des vertèbres cervicales et lombaires, ou on aura même une base de données correspondant à chacune des vertèbres considérées du rachis. On pourra en outre établir une sous-base de données des vertèbres appartenant à des individus sains ou à des individus atteints d'une scoliose, de même qu'on pourra caractériser chaque vertèbre en fonction du poids, de la taille, de l'âge ou de tout autre type de paramètre jugé nécessaire de l'individu.

Un modèle géométrique construit à partir de la base de données peut être substitué à la base de données. Ce dernier comporte par exemple des données statistiques (moyennes, variances, ...) pour chaque paramètre de la base de données, ou bien des équations mathématiques permettant de déterminer pour un objet donné la localisation de points caractéristiques à partir de la valeur de paramètres estimateurs de cet objet. La base de données contient en outre des données relatives à l'emplacement relatif de la vertèbre dans la colonne vertébrale du sujet dont elle est issue, telles que par exemple l'orientation angulaire de la vertèbre et la courbure de la colonne au niveau de la vertèbre.

On dispose en outre d'un modèle générique, par exemple établi à partir de la base de données, défini comme un maillage de quelques centaines à quelques centaines de milliers de points d'une vertèbre.

Les deux radiographies représentées sur la figure 3a représentent en différents niveaux de gris la partie du corps du patient P incluse dans le champ d'observation 4, projetée dans les plans contenant les détecteurs. Des projections des vertèbres 17 du patient sont visibles sous la forme d'une zone claire. Sur cette zone, on peut distinguer par exemple par endroits des projections des espaces intervertébraux 18 compris entre deux vertèbres 17 sous la forme de zones plus sombres. La colonne vertébrale n'est néanmoins pas forcément entièrement visible, comme sur la vue latérale de la figure 3a dans sa partie supérieure, où un bras 19 du patient forme une zone claire sur laquelle il est difficile de discerner la colonne vertébrale.

Sur chacune des deux vues, on peut par exemple identifier un certain nombre de points 20 du motif géométrique résultant de la projection de la structure à imager, tels que quelques points visibles sur une ligne centrale des motifs géométriques résultant de la projection de la colonne vertébrale. On peut également repérer quelques points 21 sur les extrémités haute et basse de ces motifs sur chacune des vues. Les points 20 et 21 peuvent par exemple être fournis manuellement par un utilisateur. Celui-ci ne doit alors pas nécessairement rentrer des points 20, 21 prédéterminés, tels que par exemple des points particuliers situés en des positions géométriques prédéterminées des faces supérieures ou inférieures de vertèbres, mais simplement des points ayant une caractéristique géométrique définie, telle .que l'appartenance approximative à une ligne ou une surface donnée.

Les points 20 de chaque image sont interpolés pour fournir une ligne centrale 22 sur chaque vue, par exemple constituée d'un ensemble de points distants chacun de 250 µm. Cette ligne 22 s'étend dans chaque vue entre une ligne supérieure 24 et une ligne inférieure 25 contenant les points 21 précédemment disposés. Si les points 20 sont entrés par un utilisateur, on peut contrôler le degré de réalisme de la ligne 22 en calculant, pour chaque nouveau point 20 entré une nouvelle ligne centrale 22, et en évaluant une distance entre la nouvelle ligne centrale 22 et la ligne centrale précédente 22. La ligne centrale 22 sera basée sur un nombre de points 20 suffisant dès que la distance entre deux lignes centrales 22 consécutives sera inférieure à une valeur prédéfinie.

On applique alors un champ de déformation D à l'image toute entière pour redresser les lignes centrales 22 de chaque vue, de manière à ce que celles-ci se présentent chacune comme un segment D(22) s'étendant entre les portions supérieure D(24) et inférieure D(25) redressées de la projection de la colonne vertébrale. On s'affranchit ainsi des contraintes liées à la courbure de la colonne vertébrale, qui est particulière au patient, et pourrait être antagoniste du procédé d'automatisation mis en oeuvre, en particulier dans le cas de sévères déformations pathologiques.

Pour une visualisation exhaustive des contrastes dans un environnement d'imagerie de grande dynamique, il est important d'inclure chaque contraste dans une plage de niveaux de gris où l'oeil réagit de manière optimale. Ceci peut-être réalisé efficacement en créant dans un premier temps une image floue, par lissage de l'image initiale, de manière à disposer en chaque point d'une moyenne des niveaux de gris dans un voisinage de quelques millimètres. On soustrait alors l'image floue à l'image initiale. Ainsi les contrastes contenus dans les zones claires et ceux inclus dans les zones sombres, difficilement perceptibles de par les piètres capacités de l'oeil dans les contextes trop ou trop peu lumineux, sont perçus de manière optimale car situés dans des zones de noircissement intermédiaires. Toutefois, la seule division par l'image floue, tend à totalement écraser la dynamique de l'image, les organes apparaissant tous avec des niveaux de luminosité comparables ce qui nuit à la lisibilité de l'ensemble. On préférera donc, avant de réaliser l'opération précédemment évoquée, comprimer partiellement la dynamique de l'image floue (par exemple à l'aide d'une fonction linéaire ou gamma). La soustraction de l'image floue de dynamique réduite à l'image initiale permet simultanément d'amener les contrastes dans les plages de gris favorables et de conserver sur l'image une dynamique globale compatible avec l'aspect traditionnel d'une image radiologique.

On détermine alors les bords latéraux D(23) des motifs projetés de la colonne vertébrale. On peut commencer par définir, sur les figures 3b, des bords latéraux initiaux comme s'étendant de part et d'autre de la ligne centrale D(22) entre les lignes supérieure D(24) et inférieure D(25). On peut approcher, par itérations successives, les bords latéraux D(23) le long de la projection de la colonne vertébrale, à partir des bords latéraux initiaux tels que définis précédemment, en se basant par exemple sur l'intensité du vecteur gradient d'intensité lumineuse à proximité desdites parois initiales. On peut, en outre, se servir des propriétés géométriques connues des bords latéraux, comme par exemple les largeurs typiques du genre de vertèbre considérée, ladite largeur typique pouvant être une moyenne, ou se rapporter à une sous-catégorie pertinente de vertèbres de la base de données (selon la taille, l'âge, le poids, etc... des individus sains ou scoliotiques ayant alimenté la base de données)

On retrouve les projections des espaces intervertébraux 18 des images redressées de la manière suivante : dans les images redressées, les projections des espaces intervertébraux correspondent sensiblement à des régions sombres orientées horizontalement. On peut donc moyenner pour chaque vue de la figure 3b la valeur d'intensité lumineuse sur chaque ligne entre les deux parois latérales D(23), et obtenir une représentation en niveaux de gris telle que représentée sur la figure 3c, les bandes gauche et droite correspondant respectivement aux images redressées gauche et droite de la figure 3b. Cette donnée étant une donnée uni-directionnelle, elle peut facilement être traitée par calcul, par exemple filtrée pour s'approcher au mieux des propriétés statistiques de la colonne vertébrale, telles que définies par la base de données. L'application d'un seuil de luminosité permet alors de retrouver l'emplacement exact des projections des espaces intervertébraux de la colonne étudiée. On peut utiliser des informations statistiques en provenance de la base de données, comme par exemple les hauteurs typiques du genre de vertèbre considéré, si les données fournies par l'image ne s'avèrent pas suffisantes.

En appliquant alors une déformation appropriée, telle que par exemple la déformation D⁻¹ inverse de D, aux images redressées sur lesquelles on a identifié la position des projections des espaces intervertébraux, on obtient les positions représentées sur l'image sur la figure 3d, où, pour chaque vue, chaque vertèbre est représentée par quatre points relatifs aux quatre coins 27, 28 du motif géométrique correspondant à la projection du corps vertébral.

Alternativement, on n'utilise pas nécessairement un jeu de déformations D et D⁻¹, et on met en oeuvre la détection des coins directement sur les images non redressées de la Figure 3a.

Alternativement, les quatre coins sont simplement fournis manuellement par un utilisateur sur chaque vue, ce qui ne nécessite pas de connaissances anatomiques précises.

Selon l'objet étudié, on peut également identifier, manuellement ou par calcul, des contours des motifs sur l'une et/ou l'autre des images.

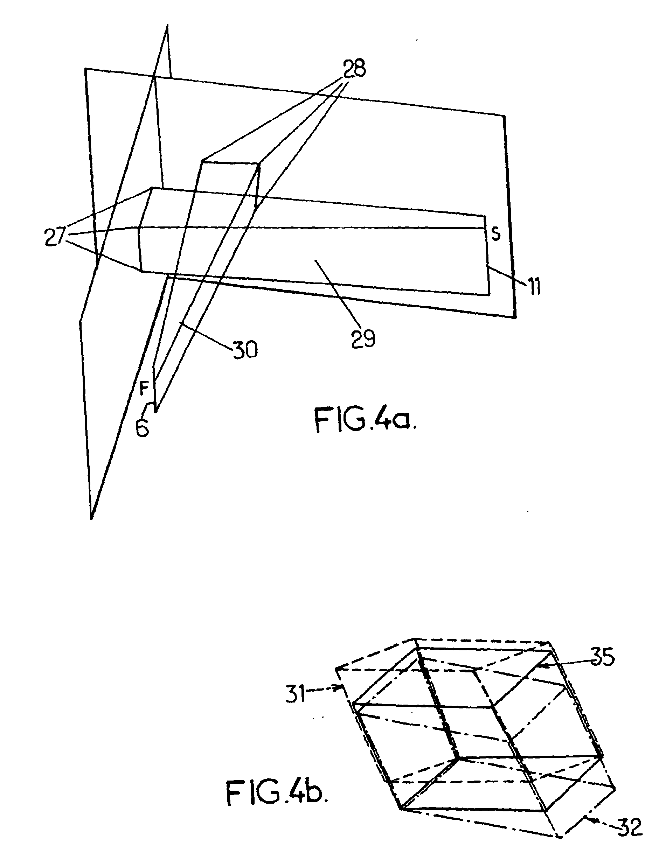

En utilisant la base de données, on reconstruit alors un modèle tridimensionnel de la colonne vertébrale, à partir des coins 27, 28 ou contours précédemment obtenus. A cet effet, on procède aux opérations suivantes :
- pour localiser la position du corps vertébral dans l'espace, on calcule 16 points tridimensionnels de la manière suivante : pour chaque vue et chaque vertèbre, on définit une surface réglée englobant les parois latérales et les bords supérieur et inférieur des motifs géométriques résultant de la projection des corps vertébraux. Pour la vue sagittale, la surface réglée sagittale 29 est définie par les quatre points 27 des motifs géométriques résultants de la projection du corps vertébral dans la vue sagittale et la ligne définie par le balayage de la source 11. La surface réglée frontale 30 est définie de même à l'aide des quatre coins 28 et de la ligne définie par le balayage de la source 5. Huit points tridimensionnels sont définis comme les intersections des bords de la surface réglée 29 avec la surface réglée comprenant les parois latérales de la surface réglée 30. Ces huit points forment les coins d'un hexaèdre sagittal 31. De manière similaire, on obtient un hexaèdre frontal 32 par intersection des bords de la surface réglée 30 avec les surfaces réglées comprenant les parois latérales de la surface réglée 29. Ces deux hexaèdres 31 et 32 sont représentés sur la figure 4b dans le cas particulier de sources de rayonnement S et F fixes ;
- on obtient le volume de confinement du corps vertébral en extrayant l'information pertinente des deux hexaèdres 31 et 32. On obtient en particulier la position et l'orientation des facettes latérales du volume de confinement comme facette moyenne des hexaèdres 31 et 32 associée à chaque côté de l'hexaèdre. On peut placer au barycentre des centres des facettes supérieures (respectivement inférieures) des deux hexaèdres 31, 32 une facette pertinente dont l'orientation est déterminée à partir du produit vectoriel des vecteurs normaux des projections des facettes supérieures (respectivement inférieures) des hexaèdres 31 et 32 sur les vues frontales et sagittales. L'intersection de ces facettes pertinentes avec les facettes latérales permet de définir un hexaèdre de confinement 35. Le centre de chaque corps de vertèbre est ensuite calculé comme le centre de gravité de l'hexaèdre de confinement 35;
- on calcule les orientations angulaires sagittale et latérale des vertèbres à partir des projections des faces de l'hexaèdre de confinement 35 associées à la vertèbre. A partir des courbures des lignes centrales des motifs géométriques résultant des projections sagittale et frontale de la colonne, et des informations de la base de données, on estime la rotation axiale de chaque vertèbre. On peut ainsi définir un repère X, Y, Z local de la vertèbre que l'on place audit barycentre ;
- à l'aide de l'hexaèdre de confinement 35 de chaque vertèbre et des orientations angulaires calculées, on estime des caractéristiques géométriques du corps vertébral tel que par exemple des hauteurs avant, arrière, gauche et droite du corps vertébral, et largeur et profondeur des plans supérieur et inférieur des corps vertébraux, correspondant aux longueurs L1,..,L8 des vertèbres de la base de données (figure 2). On n'estime pas nécessairement des longueurs, mais éventuellement des coordonnées, des superficies, ou autres ;
- on estime les positions des points C1...C23 ou autres repères de contrôle du corps vertébral par inférence statistique en utilisant lesdites caractéristiques géométriques précédentes comme estimateurs, à partir de la base de données, par exemple par régression linéaire, ou autre ; on obtient ainsi les positions tridimensionnelles des points ou repères de contrôle de l'objet étudié dans le repère local de la vertèbre, que l'on peut exprimer dans le repère global à l'aide de la position et de l'orientation du barycentre de l'hexaèdre précédemment estimé; Les repères de contrôle peuvent être issus de segments orientés dans l'espace ou de toute autre primitive géométrique ;
- on calcule la forme à trois dimensions d'un modèle représentant la vertèbre en question, le modèle calculé étant obtenu par déformation d'un modèle générique obtenu à partir de la base de données, de façon à maintenir la coïncidence des repères de contrôle du modèle générique déformé avec la position spatiale précédemment déterminée des repères de contrôle et de façon que le modèle calculé suive une forme la plus proche possible d'une isométrie du modèle générique, en travaillant cette fois sur l'ensemble des points du modèle générique.

En particulier, l'obtention du modèle à trois dimensions de chaque objet à examiner peut être obtenu par le procédé connu de krigeage ("kriging").

Le modèle obtenu peut éventuellement être alors projeté dans les plans frontaux et sagittaux et à nouveau déformé avec précision de manière à parfaire la correspondance de ses projections avec les images radiographiques.

Dans le cas particulier de la colonne vertébrale, le volume de confinement peut être déterminé à partir du motif géométrique associé à la projection du corps vertébral dans chaque image, mais on pourrait également se servir de l'identification du motif géométrique lié à la projection d'un espace inter-vertébral jouxtant deux vertèbres pour évaluer un estimateur pour l'une, l'autre ou les deux vertèbres en question.

Un mode particulier de reconstruction est décrit ici, mais toute méthode dans laquelle la détermination du modèle est effectuée à l'aide d'un estimateur déterminé à partir d'un volume de confinement est susceptible d'être couvert par l'invention. En particulier, un modèle générique peut être choisi dans une base de données par cet estimateur, ce modèle étant itérativement projeté sur les images de l'objet et déformé pour s'approcher des images de l'objet.

Comme représenté sur la figure 3, pour certaines applications, certaines structures, telles le bras pour les vertèbres thoraciques supérieures, sont susceptibles de gêner la visualisation des objets. Une fois l'enveloppe osseuse reconstruite, il est possible, connaissant les paramètres de faisceaux, (tels par exemple la tension et l'intensité du courant d'alimentation, la distance entre la source et l'objet, ou autres), et en émettant quelques hypothèses sur la nature homogène de l'os faisant écran, de déterminer le comportement radiologique de ce dernier et ainsi de connaître en chaque point de chacune des vues planes quelle fraction de l'atténuation est imputable à ces os formant écran. On peut alors reconstituer, par exemple par simple soustraction, des images plus lisibles dans lesquelles les structures osseuses formant écran n'apparaissent que faiblement. Ceci s'applique, par exemple, à la suppression d'os tels que l'humérus pour améliorer la lisibilité des vertèbres, ou à la suppression d'une vertèbre pour une meilleure visualisation du disque intervertébral.

On obtient ainsi un outil efficace d'examen pouvant servir à l'imagerie de toute partie, notamment osseuse ou cartilagineuse du corps humain ou animal, et utile notamment pour le diagnostic des scolioses ou pour le suivi pré ou post opératoire lors d'interventions chirurgicales.

Bien entendu, on peut également calculer certains indices cliniques prédéterminés liés soit à la géométrie de l'ensemble examiné, soit le cas échéant à la composition ou la densité des objets à examiner, estimée à partir des images radiographiques.

Le dispositif radiographique 1 pourrait, le cas échéant, être adapté pour l'examen d'un patient couché, ce qui pourrait s'avérer indispensable dans le domaine de la traumatologie. Dans ce cas, le patient P serait couché sur la table support, les faisceaux de rayons ionisants 10, 16 seraient chacun dans un plan vertical, et les sources 5, 11 se déplaceraient horizontalement avec les détecteurs 6, 12.

Il serait, bien entendu, possible de générer deux faisceaux ionisants non parallèles au moyen de deux réticules (par exemples deux fentes distinctes réalisées dans une même plaque métallique) à partir d'une source radioactive unique pour mettre en oeuvre l'invention, en utilisant comme précédemment deux détecteurs disposés face aux deux faisceaux et déplaçables en synchronisme avec la source et les réticules.

## Revendications

1. Procédé d'imagerie radiographique pour la reconstruction tridimensionnelle, adapté pour calculer un modèle à trois dimensions d'un premier objet à imager dans un champ d'observation comprenant en outre au moins un deuxième objet présentant une relation spatiale avec le premier objet, lesdits premier et deuxième objets comportant chacun au moins une partie caractéristique, ce procédé comprenant une étape au cours de laquelle :
(c) on calcule la forme à trois dimensions d'un modèle représentant le premier objet à partir d'un modèle géométrique connu a priori de l'objet,
**caractérisé en ce qu'**on met en outre en oeuvre une étape (b), au cours de laquelle on calcule au moins un estimateur correspondant à au moins ladite relation, à partir d'un volume de confinement, ledit volume étant estimé à partir d'au moins un motif géométrique (17) représentatif de chaque objet visible sur deux images radiographiques à deux dimensions du champ d'observation, prises à partir d'une source selon deux directions de prise de vue non parallèles, et de la position de la source (5, 11) lors de la prise d'image,
ledit modèle géométrique comprenant des informations liées à la forme à trois dimensions d'objets de même nature permettant d'établir la caractéristique géométrique pour le modèle représentant le premier objet à partir de l'estimateur.

2. Procédé selon la revendication 1 dans lequel l'étape (c) comprend des étapes au cours desquelles :
(c1) on estime un référentiel local (X, Y, Z) associé au premier objet à partir au moins d'informations issues des motifs géométriques (17) détectés sur chaque image,
(c2) on détermine la position tridimensionnelle de repères de contrôle du premier objet dans le repère local par inférence sur le modèle géométrique à partir de l'estimateur, et
(c3) on calcule la forme à trois dimensions du modèle calculé par déformation d'un modèle générique prédéterminé correspondant audit objet, ledit modèle générique comportant des repères qui correspondent auxdits repères de contrôle, de façon que ledit modèle calculé suive une forme proche d'une isométrie du modèle générique tout en maintenant en coïncidence les repères du modèle générique déformé avec lesdits repères de contrôle.

3. Procédé selon la revendication 1 ou la revendication 2, dans lequel ledit modèle géométrique est constitué à partir d'une base de données contenant des informations géométriques liées à au moins l'une des propriétés suivantes :
- des coordonnées de repères de contrôle d'un ensemble d'objets de même nature que l'objet à imager, et
- des dimensions caractéristiques d'un ensemble d'objets de même nature que l'objet à imager.

4. Procédé selon la revendication 3, dans lequel l'étape (c) est effectuée par inférence statistique sur ladite base de données en utilisant ledit estimateur comme prédicteur.

5. Procédé selon l'une quelconque des revendications précédentes, dans lequel, au cours de l'étape (b), on détermine ledit volume de confinement (35) à partir d'une surface réglée définie par au moins un motif géométrique issu de la projection de la partie caractéristique de chaque objet sur la première image et la trajectoire de la première source radioactive (5) lors de la prise de la première image et d'une surface réglée définie par au moins un motif géométrique issu de la projection de la partie caractéristique de chaque objet sur la deuxième image et la trajectoire de la deuxième source
radioactive (11) lors de la prise de la deuxième image.

6. Procédé selon la revendication 5 dans lequel lesdits motifs géométriques (17) sont identifiés manuellement par un utilisateur sur chaque image.

7. Procédé selon la revendication 5, dans lequel lesdits motifs géométriques (17) sont déterminés par traitement numérique de chacune des images, lesdits motifs géométriques étant obtenus par analyse de la luminosité des images.

8. Procédé selon la revendication 7 dans lequel on met en oeuvre les étapes suivantes :
(α) on calcule une ligne caractéristique (22) estimée de l'objet, et
(β) on redresse l'image en appliquant une première déformation adaptée pour que ladite ligne caractéristique redressée soit sensiblement un segment de droite,
dans lequel on met en oeuvre le traitement numérique pour lesdites images redressées pour obtenir au moins un motif géométrique redressé, et dans lequel on met en outre en oeuvre une étape au cours de laquelle
(ζ) on obtient les motifs géométriques (17) en appliquant auxdits motifs géométriques redressés obtenus au cours de l'étape (β) une deuxième déformation adaptée pour que le motif obtenu en appliquant ladite deuxième déformation à ladite image redressée se positionne proche de celui sur l'image initiale.

9. Procédé selon la revendication 7 ou la revendication 8 dans lequel l'objet est une vertèbre, et dans lequel, sur chaque image,
(γ) on estime des parois latérales (23) issues de la projection de chaque corps vertébral,
(δ) on estime au moins une zone de moindre niveau de gris de l'image, issue de la projection d'une zone du champ d'observation comprenant un espace intervertébral, sensiblement orthogonale aux parois latérales par une analyse des caractéristiques de luminosité de l'image, et
(ε) on détermine au moins un coin (27, 28) du motif géométrique (17) par l'intersection dudit espace intervertébral avec ladite paroi latérale.

10. Procédé selon la revendication 9, dans lequel, au cours de l'étape (δ),
(δ1) on estime une valeur moyenne de luminosité sur chaque ligne de pixels de l'image orthogonale à ladite ligne caractéristique (22 ; D(22)) dans le plan de l'image, et
(δ2) on estime une projection d'au moins un espace intervertébral par application d'un seuil de luminosité sur lesdites valeurs moyennes.

11. Procédé selon la revendication 9 ou la revendication 10 dans lequel, au cours de l'étape (γ), on estime des projections de parois latérales (23) de la vertèbre par déformation d'une paroi latérale initiale estimée à partir du modèle géométrique.

12. Procédé selon l'une des revendications 9 à 11 dans lequel, au cours de l'étape (γ), lesdites projections de parois latérales (23) sont estimées en minimisant une fonction de coût indexée sur le contraste de l'image et une paroi latérale moyenne de ladite vertèbre estimée à partir d'une base de données de vertèbres.

13. Procédé selon l'une des revendications 8 à 12, dans lequel ledit objet est une partie de colonne vertébrale, et dans lequel, au cours de l'étape (α), on calcule ladite ligne caractéristique (22) par interpolation d'un nombre adapté de points (20) de la projection de ladite colonne vertébrale fournis par un utilisateur.

14. Procédé selon l'une des revendications précédentes dans lequel on divise l'intensité lumineuse obtenue pour chaque pixel de chaque image par une valeur d'intensité lumineuse d'une image floue comprimée du même objet.

15. Procédé selon la revendication 14, dans lequel ladite image floue comprimée est obtenue en rééchelonnant pour chaque image des valeurs de luminosité moyennes de chaque pixel obtenues en effectuant pour chaque pixel une moyenne pondérée des valeurs d'intensité de pixels voisins.

16. Procédé selon l'une des revendications précédentes, dans lequel on réduit sur au moins une image les interférences dues à au moins une structure anatomique parasite (19), en soustrayant à ladite image une image atténuante représentative de l'influence de ladite structure anatomique parasite obtenue à partir d'une caractéristique connue a priori sur ladite structure anatomique.

17. Procédé selon l'une quelconque des revendications précédentes comprenant en outre une étape (a) au cours de laquelle on obtient lesdites deux images par balayage simultané du champ d'observation suivant une direction de balayage (3a), en détectant des signaux de deux faisceaux (10, 16) de rayons X non parallèles ayant traversé le champ d'observation, formant un plan d'irradiation, ladite direction de balayage étant non coplanaire audit plan d'irradiation.

18. Procédé selon la revendication 17, dans lequel ledit balayage est synchronisé avec la détection d'une manière adaptée pour que des signaux successifs provenant d'une même zone du champ d'observation soient sommés pendant la détection.

19. Programme d'ordinateur comprenant des portions de code de programme pour l'exécution des étapes du procédé selon l'une quelconque des revendications 1 à 18 lorsque ledit programme est exécuté sur un ordinateur.

## Claims

1. A radiographic imaging method for three-dimensional reconstruction, the method being adapted to calculate a three-dimensional model of a first object to be imaged in a field of observation that further comprises at least one second object presenting a three-dimensional relationship with the first object, each of the first and second objects having at least one characteristic portion, the method comprising a step during which:
(c) the three-dimensional shape of a model representing the first object is calculated from a geometrical model of the object that is known a priori;
**characterized in that** a step (b) is further implemented during which at least one estimator corresponding at least to said relationship is calculated on the basis of a confinement volume, said volume being estimated from at least one geometrical pattern (17) representative of each object visible in two two-dimensional radiographic images of the field of observation taken from a source in two non-parallel image-taking directions, and from the position of the source (5, 11) while taking the images;
said geometrical model comprising information associated with the three-dimensional shapes of objects of the same kind, enabling the geometrical characteristic for the model representing the first object to be established by means of the estimator.

2. A method according to claim 1, in which step (c) comprises steps of:
(c1) estimating a local frame of reference (X, Y, Z)in association with the first object on the basis at least of information taken from geometrical patterns (17) detected in each image;
(c2) determining the three-dimensional positions of control reference features of the first object in the local frame of reference by inference from the geometrical model using the estimator; and
(c3) calculating the three-dimensional shape of the calculated model by deforming a predetermined generic model corresponding to said object, said generic model having reference features that correspond to said control reference features, whereby said calculated model follows a shape that is close to being an isometric transformation of the generic model, while maintaining coincidence between the reference features of the deformed generic model and said control reference features.

3. A method according to claim 1 or 2, in which said geometrical model is constituted by a database containing geometrical information associated with at least one of the following properties:
- coordinates of control reference features for a set of objects of the same kind as the object to be imaged; and
- characteristic dimensions of a set of objects of the same kind as the object to be imaged.

4. A method according to claim 3, in which step (c) is performed by statistical inference from said database by using said estimator as a predictor.

5. A method according to any of the preceding claims, in which, during step (b), said confinement volume (35) is determined from a ruled surface defined by at least one geometrical pattern derived from the projection of the characteristic portion of each object on the first image and the trajectory of the first radioactive source (5) while taking the first image, and a ruled surface defined by at least one geometrical pattern derived from the projection of the characteristic portion of each object on the second image and the trajectory of the second radioactive source (11) while taking the second image.

6. A method according to claim 5, in which said geometrical patterns (17) are identified manually by a user on each image.

7. A method according to claim 5, in which said geometrical patterns (17) are determined by digitally processing each of the images, said geometrical patterns being obtained by analyzing the brightness of the images.

8. A method according to claim 7, in which the following steps are performed:
(α) calculating an estimated characteristic line (22) of the object; and
(β) straightening the image by applying a first deformation adapted so that said straightened characteristic line is substantially a straight line segment;
in which digital processing is used on said straightened images to obtain at least one straightened geometrical pattern, and in which a step is further performed of:
(ζ) obtaining the geometrical patterns (17) by applying a second deformation to said straightened geometrical patterns obtained in step (β), the second deformation being adapted so that the pattern obtained by applying it to said straightened image is positioned close to the pattern on the original image.

9. A method according to claim 7 or 8, in which the object is a vertebra, and in which, the following steps are performed on each image:
(γ) estimating side walls (23) derived from projecting each vertebral body;
(δ) estimating at least one zone of least gray level in the image, derived from projecting a zone of the field of observation containing an intervertebral space that is substantially orthogonal to the side walls by analyzing the brightness characteristics of the image; and
(ε) determining at least one corner (27, 28) of the geometrical pattern (17) as the point of intersection of said intervertebral space with said side wall.

10. A method according to claim 9, in which, during step (δ) comprises:
(δ1) a mean brightness value is estimated for each line of pixels in the image orthogonal to said characteristic line (22; D(22)) in the image plane; and
(δ2) a projection of at least one intervertebral space is estimated by applying a brightness threshold to said mean values.

11. A method according to claim 9 or 10, in which, during step (γ), projections of the side walls (23) of the vertebra are estimated by deforming an initial side wall estimated from the geometrical model.

12. A method according to any of claims 9 to 11, in which, during step (γ), said projections of the side walls (23) are estimated by minimizing a cost function indexed on the contrast of the image and a mean side wall of said vertebra estimated from a database of vertebrae.

13. A method according to any of claims 8 to 12, in which said object is a portion of the vertebral column, and in which, during step (α), said characteristic line (22) is calculated by interpolating a suitable number of points (20) of the projection of said vertebral column as supplied by a user.

14. A method according to any of the preceding claims, in which the light intensity obtained for each pixel of each image is divided by a light intensity value of a compressed fuzzy image of the same object.

15. A method according to claim 14, in which said compressed fuzzy image is obtained by recalibrating for each image mean brightness values for each pixel obtained by taking for each pixel a weighted mean of the intensity values of neighboring pixels.

16. A method according to any of the preceding claims, in which interference due to at least one interfering anatomical structure (19) is reduced in at least one image by subtracting from said image an attenuating image representative of the influence of said interfering anatomical structure obtained on the basis of a characteristic which is known a priori about said anatomical structure.

17. A method according to any of the preceding claims, further comprising a step (a) during which said two images are obtained by simultaneous scanning of the field of observation in a scanning direction (3a), by detecting signals from two non-parallel X-ray beams (10, 16) passing through the field of observation and forming an irradiation plane, said scanning direction being non-coplanar with said irradiation plane.

18. A method according to claim 17, in which said scanning is synchronized with detection so that successive signals coming from a same zone of the field of observation are summed during detection.

19. A computer program including portions of program code for executing the steps of the method according to any of claims 1 to 18 when said program is executed on a computer.

## Patentansprüche

1. Verfahren zur Röntgen-Bilderzeugung für die dreidimensionale Rekonstruktion, angepasst, um ein dreidimensionales Modell eines ersten abzubildenden Objekts in einem Beobachtungsfeld zu berechnen, welches weiter wenigstens ein zweites Objekt umfasst, das eine räumliche Beziehung zu dem ersten Objekt aufweist, wobei das erste und das zweite Objekt jeweils wenigstens einen charakteristischen Abschnitt aufweisen, das Verfahren umfassend einem Schritt, in welchem:
(c) die dreidimensionale Form eines Modells berechnet wird, welches das erste Objekt darstellt, ausgehend von einem a priori bekannten geometrischen Modell des Objekts,
**dadurch gekennzeichnet, dass** weiterhin ein Schritt (b) durchgeführt wird, in dem wenigstens eine Schätzfunktion berechnet wird, die wenigstens der Beziehung entspricht, ausgehend von einem Begrenzungsvolumen, wobei das Volumen ausgehend von wenigstens einem geometrischen Motiv (17) bestimmt wird, das repräsentativ für jedes Objekt ist, welches auf zwei zweidimensionalen Röntgen-Bildern des Beobachtungsfeldes sichtbar ist, die ausgehend von einer Quelle in zwei, nicht parallelen Aufnahme-Blickrichtungen aufgenommen worden sind, und von der Position der Quelle (5, 11) bei der Bild-Aufnahme, wobei das geometrische Modell Informationen umfasst, die mit der dreidimensionalen Form von Objekten der gleichen Art verbunden sind, was es erlaubt, ausgehend von der Schätzfunktion, das geometrische Merkmal für das Modell aufzustellen, welches das erste Objekt darstellt.

2. Verfahren nach Anspruch 1, wobei der Schritt (c) Schritte umfasst, in denen:
(c1) ein lokales Bezugssystem (X, Y, Z) bestimmt wird, das dem ersten Objekt zugeordnet ist, ausgehend von wenigstens Informationen, die von den geometrischen Motiven (17) stammen, die in jedem Bild erfasst werden,
(c2) die dreidimensionale Position von Kontrollmarkierungen des ersten Objekts in dem lokalen Bezugspunkt bestimmt wird durch Schlussfolgerung auf das geometrische Modell ausgehend von der Schätzfunktion, und
(c3) die dreidimensionale Form des berechneten Modells berechnet wird durch Deformation eines vorbestimmten generischen Modells, das dem Objekt entspricht, wobei das generische Modell Markierungen umfasst, die den Kontrollmarkierungen entsprechen, so dass das berechnete Modell einer Form nahe an einer Isometrie des generischen Modells folgt, wobei die Markierungen des deformierten generischen Modells mit den Kontrollmarkierungen in Übereinstimmung gehalten werden.

3. Verfahren nach Anspruch 1 oder Anspruch 2, wobei das geometrische Modell ausgehend von einer Datenbank gebildet ist, die geometrische Informationen umfasst, welche mit wenigstens einer der folgenden Eigenschaften verbunden sind:
- Koordinaten von Kontrollmarkierungen einer Gesamtheit von Objekten der gleichen Art wie das abzubildende Objekt, und
- charakteristische Abmessungen einer Gesamtheit von Objekten der gleichen Art wie das abzubildende Objekt.

4. Verfahren nach Anspruch 3, wobei der Schritt (c) durch statistische Schlussfolgerung auf die Datenbank durchgeführt wird, wobei die Schätzfunktion als Vorhersagefunktion verwenden wird.

5. Verfahren nach einem der vorhergehenden Ansprüche, wobei im Schritt (b) das Begrenzungsvolumen (35) ausgehend von einer Regelfläche bestimmt wird, die durch wenigstens ein geometrisches Motiv, das von der Projektion des charakteristischen Abschnitts von jedem Objekt auf das erste Bild stammt, und durch die Trajektorie der ersten radioaktiven Quelle (5) beim Aufnehmen des ersten Bildes definiert ist, und von einer Regelfläche, die durch wenigstens ein geometrisches Motiv, das von der Projektion des charakteristischen Abschnitts von jedem Objekt auf das zweite Bild stammt, und durch die Trajektorie der zweiten radioaktiven Quelle (11) beim Aufnehmen des zweiten Bildes definiert ist.

6. Verfahren nach Anspruch 5, wobei die geometrischen Motive (17) manuell von einem Benutzer auf jedem Bild identifiziert werden.

7. Verfahren nach Anspruch 5, wobei die geometrischen Motive (17) durch numerische Behandlung von jedem der Bilder bestimmt werden, wobei die geometrischen Motive durch Analyse der Leuchtkraft der Bilder erhalten werden.

8. Verfahren nach Anspruch 7, wobei die folgenden Schritte durchgeführt werden:
(α) eine geschätzte charakteristische Linie (22) des Objekts wird berechnet und
(β) das Bild wird gerade gerichtet, indem eine erste Deformation angewendet wird, die dazu angepasst ist, dass die gerade gerichtete charakteristische Linie im Wesentlichen ein gerades Segment ist,
wobei die numerische Behandlung für die gerade gerichteten Bilder durchgeführt wird, um wenigstens ein gerade gerichtetes geometrisches Motiv zu erhalten, und wobei weiter ein Schritt durchgeführt wird, in dem
(ζ) die geometrischen Motive (17) erhalten werden, indem auf die gerade gerichteten geometrischen Motive, die im Schritt (β) erhalten wurden, eine zweite Deformation angewendet wird, die angepasst ist, damit das durch das Anwenden der zweiten Deformation auf das gerade gerichtete Bild erhaltene Motiv sich nahe an demjenigen auf dem ursprünglichen Bild positioniert.

9. Verfahren nach Anspruch 7 oder 8, wobei das Objekt ein Wirbel ist, und wobei, auf jedem Bild
(γ) die Seitenwände (23) bestimmt werden, die von der Projektion jedes Wirbelkörpers stammen,
(δ) wenigstens ein Bereich mit geringerem Grauwert des Bildes bestimmt wird, der von der Projektion eines Bereichs des Beobachtungsfeldes stammt, der einen Zwischenwirbelraum umfasst, im Wesentlichen orthogonal zu den Seitenwänden, durch eine Analyse der Leuchtkraft-Eigenschaften des Bildes und
(ε) wenigstens eine Ecke (27, 28) des geometrischen Motivs (17) durch Schneiden des Zwischenwirbelraums mit der Seitenwand bestimmt wird.

10. Verfahren nach Anspruch 9, wobei in Schritt (δ)
(δ1) ein mittlerer Helligkeitswert auf jeder Linie von Pixeln des Bildes orthogonal zu der charakteristischen Linie (22; D(22)) in der Ebene des Bildes bestimmt wird, und
(δ2) eine Projektion von wenigstens einem Zwischenwirbelraum durch Anwendung eines Leuchtkraft-Schwellenwertes auf die mittleren Werte bestimmt wird.

11. Verfahren nach Anspruch 9 oder Anspruch 10, wobei, im Schritt (γ), Projektionen von Seitenwänden (23) des Wirbels bestimmt werden, durch Deformation einer ursprünglichen Seitenwand, die ausgehend von einem geometrischen Modell bestimmt wird.

12. Verfahren nach einem der Ansprüche 9 bis 11, wobei, in Schritt (γ), die Projektionen der Seitenwände (23) bestimmt werden, indem eine Kostenfunktion minimiert wird, die indiziert ist auf den Kontrast des Bildes und eine mittlere Seitenwand des Wirbels, die ausgehend von einer Wirbel-Datenbank bestimmt wird.

13. Verfahren nach einem der Ansprüche 8 bis 12, wobei das Objekt ein Teil der Wirbelsäule ist und in dem, in Schritt (α), die charakteristische Linie (22) durch Interpolation einer angepassten Anzahl von Punkten (20) der Projektion der Wirbelsäule bestimmt wird, die von einem Benutzer geliefert werden.

14. Verfahren nach einem der vorhergehenden Ansprüche, wobei die für jedes Pixel von jedem Bild erhaltene Leuchtintensität durch einen Wert der Leuchtintensität eines unscharfen, komprimierten Bild des selben Objekts geteilt wird.

15. Verfahren nach Anspruch 14, wobei das unscharfe, komprimierte Bild erhalten wird, indem für jedes Bild mittlere Leuchtkraftwerte von jedem Pixel neu aufgestellt werden, die durch Bilden eines gewichteten Mittelwerts von Intensität-Werten von benachbarten Pixeln erhalten werden.

16. Verfahren nach einem der vorhergehenden Ansprüche, wobei auf wenigstens einem Bild die Interferenzen aufgrund von wenigstens einer parasitären anatomischen Struktur (19) reduziert werden, indem von dem Bild ein Dämpfungsbild abgezogen wird, das repräsentativ für den Einfluss der parasitären anatomischen Struktur ist, erhalten ausgehend von einem a priori bekannten Merkmal der anatomischen Struktur.

17. Verfahren nach einem der vorhergehenden Ansprüche, weiter umfassend einen Schritt (a), in dem die zwei Bilder durch simultanes Scannen des Beobachtungsfeldes entlang einer Scan-Richtung (3a) erhalten werden, wobei Signale von zwei Bündeln (10, 16) von nichtparallelen Röntgenstrahlen erfasst werden, die das Beobachtungsfeld durchquert haben, und die eine Bestrahlungsebene bilden, wobei die Scan-Richtung nicht koplanar zu der Bestrahlungsebene ist.

18. Verfahren nach Anspruch 17, wobei das Scannen mit der Erfassung auf eine Weise synchronisiert ist, die dazu angepasst ist, dass aufeinander folgende Signale, die aus dem gleichen Bereich des Beobachtungsfelds kommen, während der Erfassung summiert werden.

19. Computerprogramm, umfassend Programm-Code-Abschnitte, zum Ausführen der Schritte des Verfahrens nach einem der Ansprüche 1 bis 18, wenn das Programm auf einem Computer ausgeführt wird.
